(19) Europäisches Patentamt
European Patent Office
Office européen des brevets

(11) Veröffentlichungsnummer: **0 232 747 B1**

(12) **EUROPÄISCHE PATENTSCHRIFT**

(45) Veröffentlichungstag der Patentschrift: **30.09.92**

(51) Int. Cl.[5]: **C09D 5/44**

(21) Anmeldenummer: **87100578.1**

(22) Anmeldetag: **17.01.87**

# (54) Verfahren zum Beschichten von Gegenständen durch anodische Elektrotauchlackierung, wässriges hitzehärtbares Überzugsmittel, dessen Verwendung und damit beschichtete Gegenstände.

(30) Priorität: **21.01.86 DE 3601560**

(43) Veröffentlichungstag der Anmeldung:
**19.08.87 Patentblatt 87/34**

(45) Bekanntmachung des Hinweises auf die Patenterteilung:
**30.09.92 Patentblatt 92/40**

(84) Benannte Vertragsstaaten:
**AT BE DE ES FR GB IT NL SE**

(56) Entgegenhaltungen:
**EP-A- 0 032 554**
**EP-A- 0 101 307**
**EP-A- 0 174 628**
**EP-A- 0 188 689**
**US-A- 4 452 929**
**US-A- 4 487 861**

(73) Patentinhaber: **Herberts Gesellschaft mit beschränkter Haftung**
**Christbusch 25**
**W-5600 Wuppertal 2(DE)**

(72) Erfinder: **Patzschke, Hans-Peter, Dr.**
**Am Heckendorn 71**
**W-5600 Wuppertal 2(DE)**
Erfinder: **Lüttenberg, Albrecht**
**Dönberger Strasse 136**
**W-5600 Wuppertal 1(DE)**
Erfinder: **Schlinsog, Hans-Jürgen**
**Ellenbeck 81**
**W-5603 Wülfrath(DE)**
Erfinder: **Bogdan, Wolfgang**
**Hermann-Ehlers-Strasse 105**
**W-5600 Wuppertal 1(DE)**

(74) Vertreter: **Türk, Gille, Hrabal, Leifert**
**Brucknerstrasse 20**
**W-4000 Düsseldorf 13(DE)**

**EP 0 232 747 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Beschichten von Gegenständen mit elektrisch leitender Oberfläche mittels anodischer Elektrotauchlackierung. Die Beschichtung wird mit einem wäßrigen hitzehärtbaren Überzugsmittel durchgeführt, das als Bindemittel enthält: ein Gemisch aus

| | |
|---|---|
| 85 bis 4o Gew.-% | mit Base jeweils neutralisiertem carboxyl- und/oder phosphorsäurehaltigem Epoxidharz, Acrylatharz oder Polyester als Basisharz mit einer Säurezahl von 1o bis 175, z.B. 15 bis 175 und einem mittleren Molekulargewicht $\overline{M}n$ von 1ooo bis 1oooo (Komponente A) |
| 5 bis 25 Gew.-% | Epoxidharz-Pfropfpolymerisat mit einer Säurezahl von 3o bis 2oo, hergestellt aus einem epoxidgruppenfreien Reaktionsprodukt von fettsäurefreien Polyglycidylethern mit mehr als 1.3 Epoxidgruppen pro Molekül und einem Epoxid-Äquivalentgewicht von 1ooo bis 5ooo, z.B. 1ooo bis 3ooo mit $\alpha,\beta$-ungesättigten Monocarbonsäuren (Komponente B) |
| 5 bis 4o Gew.-% | vollverethertes Amin-Formaldehyd-Kondensationsharz und/oder vollverethertes Phenol-Formaldehydkondensationsharz mit im Durchschnitt mindestens 2 reaktiven Stellen pro Molekül (Komponente C), |

sowie organisches Lösungsmittel in einer Menge bis zu 2o Gew.-% bezogen auf das Gesamtgewicht des Überzugsmittels, gegebenenfalls Übliche Lackzusatzstoffe sowie gegebenenfalls Pigmente und/oder Füllstoffe.

Ferner betrifft die Erfindung ein wäßriges hitzehärtbares Überzugsmittel auf Epoxidharz-, Acrylatharz- oder Polyesterbasis im Gemisch mit Aldehyd-Kondensationsharz als Vernetzungsmittel, sowie mit organischem Lösungsmittel in einer Menge bis zu 2o Gew.-%, bezogen auf das Gesamtgewicht des Überzugsmittels und gegebenenfalls üblichen Lackzusatzstoffen, sowie gegebenenfalls Pigmenten und/oder Füllstoffen, das das bei dem vorstehenden Verfahren verwendete Bindemittel enthält, wobei die Komponente C ein vollverethertes Phenol-Formaldehyd-Kondensationsharz mit mindestens zwei reaktiven Stellen pro Molekül ist.

Die Erfindung betrifft außerdem die Verwendung dieses Überzugsmittels zum Beschichten von Substraten, ein Verfahren zum Beschichten der Substrate, insbesondere mittels der anodischen Elektrotauchlackierung (ATL), und nach diesem Verfahren beschichtete Gegenstände. Überzugsmittel der eingangs erwähnten Art sind bekannt, z.B. wird in der EP-A-O1 44 872 (US-PS 4 487 861) eine wäßrige Polymerzusammensetzung beschrieben, die ein Epoxidharz-Acryl-Pfropfcopolymeres und einen Epoxidharz-Phosphorsäureester enthält und mit einem Aminoplastharz versetzt werden kann. Sie dient als Überzugszusammensetzung, führt jedoch zu Überzügen, die für die Beschichtung von Dosen, besonders Weißblechdosen, die zur Konservierung von Nahrungsmitteln dienen sollen, qualitativ nicht ausreichend sind. Eine Beschichtung durch Elektrophorese wird nicht beschrieben.

In der EP-A-O1 74 628 werden Gemische aus Epoxidharz-Phosphorsäurees Acrylatharzen elektrophoretisch abgeschieden. Sie führen zu Dosenüberzügen, die für eine Füllung und Lagerung mit Nahrungsmitteln ungeeignet sind.

In der EP 188 689 werden Epoxidharz-Phosphorsäureester beschrieben, die mit Harzen kombiniert werden, die mit einer Base in Wasser nicht selbst dispergierbar sind. Es handelt sich hier um Acrylharze, Butadienöle, Polyester, Alkydharze oder Polyurethane, die im wesentlichen keine freien Säuregruppen mehr enthalten. Experimentielle Versuche zeigen, daß sich bei elektrophoretischer Beschichtung, besonders von Weißblechdosen, keine geeigneten glatten Filme herstellen lassen.

Die zunehmend verschärften Anforderungen des Umweltschutzes fuhren zur Entwicklung von wäßrigen Überzugsmitteln, die nur geringe Mengen organische Lösemittel enthalten. Besonders schwierig ist es, solche wäßrigen Überzugsmittel für das bekannte Elektrotauch-Lackierverfahren (ETL), insbesondere zum Lackieren von Emballagen wie Getränke- und Nahrungsmitteldosen einzusetzen. Die Ursache hierfür liegt einmal in der apparativen Einrichtung (vergl. DE-A-33 04 940), zum anderen in der Entwicklung geeigneter Überzugsmittel.

Elektrophoretische Abscheidungen mit den bekannten wasserverdünnbaren Lacken zeigten, daß diese oft zu elektrischen Durchschlägen neigen. Die eingebrannten Filme haben eine zu hohe Porigkeit, was bei der Lagerung von Getränken und Lebensmitteln zum Lochfraß führt. Diese Nachteile treten ein, wenn man carboxylgruppenhaltige und phosphorsäurehaltige Acrylatharze, Polyester oder Epoxidharze mit Melaminharzen oder Phenolharzen kombiniert. Um einwandfreie ETL-Beschichtungen zu erhalten, müssen lagerbeständige, wäßrige Lacke gefunden werden, die einen ausreichenden Umgriff haben, sich ohne elektrische Durchschläge einwandfrei abscheiden lassen, als eingebrannter Film eine möglichst niedrige Porigkeit zeigen und den gesundheitlichen Vorschriften der einzelnen Länder entsprechen, z.B. FDA der USA und

BGA der Bundesrepublik Deutschland.

Der Erfindung liegt die Aufgabenstellung zugrunde, diese Nachteile zu vermeiden, insbesondere die elektrischen, mechanischen und chemischen Eigenschaften des Bades und des abgeschiedenen und eingebrannten Filmes zu verbessern.

Es wurde überraschenderweise gefunden, daß diese Aufgabenstellung mit dem Verfahren und dem Überzugsmittel gemäß den Patentansprüchen gelöst wird.

Gegenstand der Erfindung ist demgemäß das eingangs genannte Verfahren zum Beschichten von Gegenständen mit elektrisch leitender Oberfläche mittels anodischer Elektrotauchlackierung.

Ein weiterer Gegenstand der Erfindung ist demgemäß ein wäßriges, hitzehärtbares Überzugsmittel auf Epoxidharz-, Acrylatharz- oder Polyesterbasis im Gemisch mit Aldehyd-Kondensationsharz als Vernetzungsmittel, sowie mit organischem Lösemittel in einer Menge bis zu 2o Gew.-% bezogen auf das Gesamtgewicht des Überzugsmittels, und gegebenenfalls üblichen Lackzusatzstoffen sowie gegebenenfalls Pigmenten und/oder Füllstoffen, das dadurch gekennzeichnet ist, daß es als Bindemittel enthält

| | |
|---|---|
| 85 bis 40 Gew.-% | mit Base jeweils neutralisiertem carboxyl- und/oder phosphorsäurehaltigem Epoxidharz, Acrylatharz oder Polyester als Basisharz mit einer Säurezahl von 1o bis 175 und einem mittleren Molekulargewicht $\overline{M}n$ von 1000 bis 10000 (Komponente A) |
| 5 bis 25 Gew.-% | Epoxidharz-Pfropfpolymerisat mit einer Säurezahl von 30 bis 200, hergestellt aus einem epoxidgruppenfreien Reaktionsprodukt von fettsäurefreien Polyglycidylethern mit mehr als 1.3 Epoxidgruppen pro Molekül und einem Epoxid-Äquivalentgewicht von 1000 bis 5ooo mit $\alpha,\beta$-ungesättigten Monocarbonsäuren (Komponente B) und |
| 5 bis 40 Gew.-% | vollverethertes Phenol-Formaldehydkondensationsharz mit im Durchschnitt mindestens 2 reaktiven Stellen pro Molekül (Komponente C). |

Die folgenden bevorzugten Ausführungsformen und Beispiele beziehen sich auf das erfindungsgemäße Verfahren sowie auf das erfindungsgemäße Überzugsmittel.

Beim erfindungsgemäßen Verfahren und Überzugsmittel sind bevorzugte Verhältnisse:

| | |
|---|---|
| Komponente A: | 75 bis 45 Gew.-% |
| Komponente B: | 10 bis 20 Gew.-% |
| Komponente C: | 10 bis 35 Gew.-%. |

Nach einer Ausführungsform ist die Komponente A ein fremdvernetzendes, gegebenenfalls (Alkyl)-vinylaromaten enthaltendes (Meth)acrylatharz mit einer Saurezahl von 20 bis 120 und einer OH-Zahl von 0 bis 200. Bevorzugt ist die Säurezahl 25 bis 40 und die OH-Zahl 80 bis 150.

Bei dem in der Komponente A eingesetzten carboxyl- und/oder phosphorsäurehaltigen Epoxidharz kann es sich z. B. um einen fettsäurefreien sauren Epoxidharz-Phosphorsäureester handeln mit einer Säurezahl von 10 bis 150. Bevorzugt liegt diese Zahl bei 15 bis 150. Es hat sich gezeigt, daß die Säurezahl des Epoxidharz-Phosphorsäureesters günstig bei niedrigeren Werten als die Säurezahlen des Epoxidharz-Pfropfpolymerisats der Komponente B liegt. Es ist daher bevorzugt, wenn die Säurezahl des Epoxidharz-Phosphorsäureesters 1o bis 4o, bevorzugt 2o bis 4o, beispielsweise 1o bis 35 oder 12 bis 3o beträgt.

Der saure Epoxidharz-Phosphorsäureester der Komponente A hat bevorzugt ein Molekulargewicht von 25oo bis 7ooo, insbesondere von 3ooo bis 5ooo.

Das Epoxidäquivalentgewicht des in der Komponente A eingesetzten Epoxidharz-Phosphorsäureesters liegt dann naturgemäß, entsprechend den bevorzugten Säurezahlen, bevorzugt bei 5oo bis 4ooo, wobei es je nach Säurezahl bevorzugt sein kann, Werte von 15oo bis 5ooo oder Werte von 18oo bis 4ooo speziell 2ooo bis 35oo zu wählen, wobei sich die letztgenannten höheren Werte für das Epoxidäquivalentgewicht naturgemäß für die bevorzugten niedrigeren Säurezahlen ergeben. Es sind beispielsweise auch Epoxidäquivalentgewichte von 18o bis 25oo geeignet.

Weist der gemäß der vorstehend erwähnten bevorzugten Ausführungsform als Komponente A eingesetzte Epoxidharz-Phosphorsäureester Säurezahlen im genannten unteren Bereich auf, so ist es, um ein stabiles wäßriges Überzugsmittel zu erhalten, notwendig, daß die übrigen Komponenten, wie Epoxidharz-Pfropfpolymerisat (Komponente B) Säurezahlen in einem höheren Bereich enthalten. Die für Dosenlacke bevorzugt eingesetzten Epoxidharz-Phosphorsäureester mit niedriger Säurezahl und hohem Molekulargewicht lassen sich elektrophoretisch nur dann mit glatter Oberfläche abscheiden, wenn sie zumindest eine geringe Menge an phenolharzmodifiziertem Polyester oder acryliertem Epoxidharz mit höherer Säurezahl enthalten.

Erfindungsgemäß ist es bevorzugt, für die Komponente A Verbindungen mit einer relativ niedrigen Säurezahl, beispielsweise 12 bis 3o, im Gemisch einzusetzen mit solchen, die eine höhere Säurezahl

enthalten, beispielsweise 35 bis 1oo. Verbindungen der Komponente A mit sehr niedriger Säurezahl sind unter Umständen in Wasser nicht gut löslich. Durch Vermischen mit Komponente A und Komponente B mit hoher Säurezahl wird jedoch eine ausreichende Mischbarkeit erzielt. Eine ausreichende Mischbarkeit mit Wasser bei Komponente A mit niedriger Säurezahl von z.B. 1o bis 4o kann man auch dadurch erzielen, daß man diesen Komponenten eine relativ hohe OH-Zahl, z.B. 1oo bis 2oo verleiht.

Als Polyester der Komponente A kann auch ein phenolharzmodifizierter carboxylgruppenhaltiger ölfreier Polyester mit einer Säurezahl bevorzugt von 3o bis 11o, besonders bevorzugt von 35 bis 7o eingesetzt werden.

Nach einer anderen Ausführungsform ist die Komponente A ein fettsäurefreier, saurer Epoxidharz-Carbonsäureester mit einer Säurezahl von 25 bis 100, der hergestellt wurde durch Umsetzung von einem epoxidgruppenhaltigen Harz mit mehr als 1.3 Epoxidgruppen pro Molekül und einem Epoxid-Äquivalentgewicht von 180 bis 2500 mit Mono(alkyl)phenolen und/oder überschüssigen mehrkernigen Phenolen und anschließende Reaktion des so erhaltenen epoxidgruppenfreien Reaktionsproduktes mit cyclischen Carbonsäureanhydriden. Die Säurezahl ist vorzugsweise 30 bis 50 und das EpoxidÄquivalentgewicht der eingesetzten Verbindung bevorzugt 400 bis 1000.

Als Basisharz in der Komponente A eignet sich ein neutralisiertes Reaktionsprodukt von Phosphorsäure, besonders Orthophosphorsäure mit epoxidgruppenhaltigen Polyglycidylethern und/oder Polyglycidyl(meth)-acrylaten. Sie werden in bekannter Weise z.B. nach der DE-A- 27 57 733 (US-A-4 164 487 und US-A-4 289 812) hergestellt. Unter Polyglycidylether im Rahmen dieser Erfindung werden vorzugsweise Harze der allgemeinen idealisierten Formel

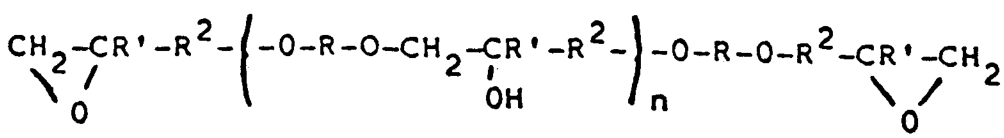

mit

R =

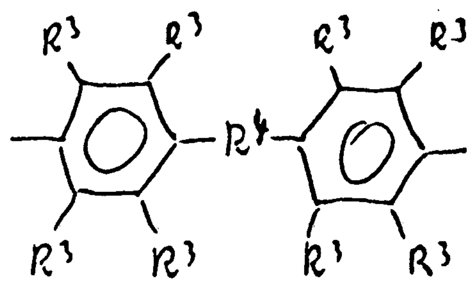

verstanden, wobei

R' = $-C_mH_{2m+1}$ und/oder bevorzugt -H,
$R^4$ = $-SO_2-$, -O-, bevorzugt $-CR^3{}_2-$,
$R^2$ = $-(CR^1{}_2)_m-$, bevorzugt $-CH_2-$,
$R^3$ = Halogen oder R'
n = 0 bis 15, bevorzugt 6 bis 13, und
m = 1 bis 8, bevorzugt 1 ist.

Beispiele sind Reaktionsprodukte verschiedenen Molekulargewichts aus Dihydroxy-diphenylpropan (Bisphenol A) oder Dihydroxy-diphenylmethan (Bisphenol F) und Epichlorhydrin und/oder Methylepichlorhydrin. Produkte mit höheren Molekulargewichten können auch nach anderen Verfahren hergestellt werden, wie Umsetzung von niedrigen Polyepoxiden mit Bisphenol A. Diese Polyglycidylether haben ein Epoxid-Äquivalentgewicht von 18o bis 5ooo, besonders von 15oo bis 5ooo speziell 2ooo bis 4ooo. Sie können teilweise oder vollständig hydriert sein oder in Gemischen mit unterschiedlichem Epoxid-Äquivalentgewicht oder mit unterschiedlicher Struktur eingesetzt werden. Geeignet sind auch Polyglycidylether von phenolischen Novolakharzen, wodurch die Funktionalität von 2 bis auf etwa 6 Glycidylgruppen pro Molekül gesteigert werden kann. Die Funktionalität der Harze kann auch durch Reaktion mit monofunktionellen (Alkyl)phenolen oder Monocarbonsäuren, bevorzugt α-verzweigte Monocarbonsäuren herabgesetzt werden. Zum Elastifizieren kann ein Teil des beschriebenen Polyglycidylethers durch aliphatische Polyglycidylether der Formel

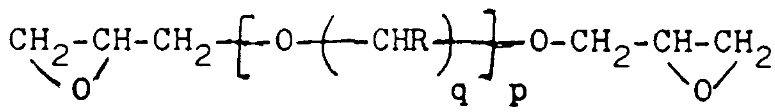

ersetzt werden, wobei R = H oder ein niedriger, gegebenenfalls mit verschiedenen Substituenten versehener Alkylrest ist und q = 2 bis 6 und p = 3 bis 50 bedeutet. Beispiele sind Reaktionsprodukte von Epichlorhydrin mit Polypropylenglykol oder Polybutylenglykol verschiedenen Molekulargewichts. Die Epoxidharze können auch durch Reaktion von längerkettigen Dicarbonsäuren wie Isophthalsäure, Cyclohexandicarbonsäure, Adipinsäure oder Sebacinsäure mit langkettigen Polyalkoholen wie Hexandiol-1,6, Glycerin, Monoanhydropentaerythrit, Polytetrahydrofurandiol, Polycaprolactondiol, Polycaprolactamdiol oder Polybutadiendiol, sowie NCO-terminisierten Reaktionsprodukten aus Polyalkoholen und Polyisocyanaten oder halbblockierten Diisocyanaten modifiziert sein oder stufenweise hergestellt werden. Die Umsetzung wird üblicherweise mit 70 bis 90 %igen Phosphorsäure-Lösungen in einem geschlossenen Druckgefäß während 3 bis 6 Stunden bei Temperaturen von 110 bis 130°C durchgeführt, wobei etwa 0.3 bis 1.2 Phosphorsäure-Gruppen, bevorzugt weniger als 1 Phosphorsäure-Gruppe pro Oxiranring eingesetzt werden. Es werden etwa 0,5 bis 3 Gew.-% Phosphorsäure mit 1oo g Epoxidharz umgesetzt. Für die Verdünnbarkeit mit Wasser ist außerdem der Anteil an Wasser maßgebend, der zur Addition an oxirangruppen und zur Hydrolyse der gebildeten Phosphorsäure-di-und-triester dient. Der Gehalt an nicht umgesetzter Phosphorsäure im Endprodukt sollte so gering wie möglich sein. Als flüchtige Basen werden zum Neutralisieren besonders vorteilhaft niedrigmolekulare, flüchtige Amine der Formel $-NR_2$ eingesetzt, wobei R für -H, -Methyl und/oder -Ethyl steht. Dies ist im einzelnen in der DE-A-27 57 733 (US-A-4 164 487) beschrieben.

Als epoxidgruppenhaltige Harze (Komponente A ) können auch Poly(meth)acrylatharze eingesetzt werden, die neben (Meth)acrylsäureestern mit $C_1$ bis $C_{15}$-Alkoholresten und/oder gegebenenfalls substituierten Vinylaromaten epoxidgruppenhaltige, ungesättigte Monomere einpolymerisiert enthalten. Hierfür geeignet sind Glycidylether der (Meth)acrylsäure sowie der Malein- und/oder Fumarsäure, Glycidylether von ungesättigten Alkoholen wie Vinylalkohol, Allylalkohol und/oder Hydroxyalkyl(meth)acrylat, Glycidylverbindungen des (Meth)acrylamids, des Malein- und/oder Fumarsäurediamids oder des Maleinimids. Die Harze werden durch radikalische Lösungspolymerisation bei Temperaturen von 60 bis 160°C hergestellt.

Eine weitere Gruppe von Basisharzen (Komponente A) sind carboxylgruppenhaltige Epoxidharze, die nicht mit linearen gesättigten oder ungesättigten Fettsäuren modifiziert sind. Hier können die schon unter Komponente A beschriebenen Epoxidharze eingesetzt werden. Es werden jedoch Epoxidharze mit niedrigem Epoxidäquivalentgewicht, z.B. 18o bis 25oo, bevorzugt 4oo bis 2ooo, eingesetzt. Sie werden umgesetzt mit gesättigten oder ungesättigten aliphatischen, cycloaliphatischen und/oder aromatischen Polycarbonsäuren und/oder ihren Anhydriden, wie Adipinsäure, Sebacinsäure, Isophthalsäure, Cyclohexan-dicarbonsäure, Tetrahydrophthalsäureanhydrid, Trimellithsäureanhydrid. Die Umsetzung kann auch mit Hydroxycarbonsäuren wie Dimethylolpropionsäure oder Hydroxybenzoesäure erfolgen. Besonders geeignet sind solche Harze, deren Estergruppen schwer verseifbar sind.

Ein übliches Verfahren ist die Reaktion der Epoxidgruppen mit Monocarbonsäuren, die schwerverseifbare Ester bilden, oder mit ($C_1$ bis $C_{15}$-Alkyl)-Phenolen. Die Umsetzung erfolgt in der Schmelze oder durch aceotrope Kondensation bei Temperaturen von 100 bis 220°C, bevorzugt 130 bis 180°C, gegebenenfalls unter Zusatz von geeigneten basischen Katalysatoren, wie Triphenylphosphin, Tetra-Alkyl, Arylammoniumsalze, wie Tetramethylammoniumchlorid, Tetra-alkyl, Aryl-phosphoniumsalze, wie Ethyltriphenylphosphoniumacetat, oder geeigneten Metallsalzen, wie Chrom-III-ethylhexanoat-Komplexe. Beispiele für Phenole sind substituierte Monophennole, wie tert.-Butylphenol, und Bisphenol A, das im Überschuß eingesetzt die Polymerkette abbricht. Verseifungsstabilere Ester werden durch Reaktion mit Aryl-monocarbonsäure, wie Benzoesäure oder tert.-Butylbenzoesäure, oder mit linearen $\alpha$-verzweigten $C_2$ bis $C_{20}$-Alkanmonocarbonsäuren, wie Versaticsäure ®, hergestellt. Voraussetzung für die erhöhte Verseifungsstabilität des Harzes ist, daß möglichst alle Epoxidgruppen umgesetzt sind. Durch Verknüpfen von zwei Molekülen dieses Vorproduktes mit Alkandicarbonsäuren wird eine hydrolysestabilere Elastifizierung erreicht.

In einem zweiten Reaktionsschritt werden cyclische Anhydride an die sekundären Hydroxylgruppen bei Reaktionstemperaturen von 100 bis 160°C unter Bildung eines relativ stabilen sauren Halbesters angelagert. Als cyclische Anhydride werden bevorzugt verwendet Bernsteinsäureanhydrid, Tetrahydrophthalsäureanhydrid, Trimellithsäureanhydrid oder Tricarbonsäureanhydride, deren Carboxylgruppe mit einem linearen oder verzweigten $C_2$ bis $C_{20}$-Monoalkohol verestert ist. Harze dieser Art werden in der DE-A-23 54 607 (US-A-3 862 914) oder DE-C-27 47 818 beschrieben. Die Säurezahl der Harze beträgt 25 bis 100. Sie sollte, um

eine gute Sterilisationsfestigkeit zu erzielen, möglichst niedrig liegen, bevorzugt unter 40, besonders bevorzugt unter 35.

Eine andere Gruppe von Basisharzen (Komponente A) sind carboxylgruppenhaltige, phenolharzmodifizierte Polyester, wie sie in der AT-A-28o 6o5, DE-A-26 38 464 und/oder EP-B-0 062 786 beschrieben werden. Hierzu werden Polyole oder hydroxylgruppenhaltige Vorkondensate mit vorzugsweise 2 bis 4 OH-Gruppen pro Molekül mit höhermolekularen hydroxylgruppenhaltigen Phenolethern so umgesetzt, daß sie durch Neutralisation in eine wasserverdünnbare Form übergeführt werden können. Um optimale Eigenschaften zu erreichen, müssen die eingesetzten Polyesterharze ein mittleres Molekulargewicht $\overline{M}n$ von mindestens 1500 aufweisen und jeweils 0.3 bis 3, vorzugsweise 0.8 bis 2 Hydroxyl- und Carboxyläquivalente pro 1000 g Polyester enthalten. Hierbei werden in bekannter Weise aus Polyalkoholen, wie Hexandiol-1,6, Neopentylglykol, Cyclohexandimethanol, Trimethylolpropan, Glycerin und/oder Pentaerythrit, und Polycarbonsäuren, wie Adipinsäure, Isophthalsäure, Cyclohexan-1,4-dicarbonsäure, oder Trimellithsäureanhydrid Polyester-Vorprodukte hergestellt, die keine ungesättigten Fettsäuren enthalten. Diese ölfreien Polyester werden bei Abwesenheit von sauren Katalysatoren mit ein- oder mehrkernigen Phenolen, besonders Alkylphenolen, und mit Aldehyden bei 6o bis 16o°C, besonders 1oo bis 13o°C, umgesetzt. Bevorzugte Phenole sind Monoalkylphenole, wie p-tert.-Butylphenol, p-Cumylphenol, Nonylphenol, Phenylphenol oder Bisphenol A (1,1-Bis-4-hydroxyphenyl-propan),die in Mengen von 0.5 bis 50 Gew.-% eingebaut werden. Besonders günstige Ergebnisse bezüglich der Resistenzeigenschaften der eingebrannten Filme gegen aggressive Lösemittel werden bei teilweisem oder vollständigem Ersatz der genannten Phenole durch Phenolcarbonsäuren erzielt. Hierzu geeignet sind z.B. 4,4-Bis-(4-hydroxyphenyl)pentansäure, Glykolsäurederivate von Diphenolen, wie das 2-(4-Hydroxyphenyl)-2-(carbäthoxyphenyl)propan, oder Salicylsäure. Als Aldehyd wird, wie in der Phenolharzchemie üblich, vorzugsweise Formaldehyd in einer Menge von 0.5 bis 3 Mol pro Mol phenolischer Hydroxylgruppe zugesetzt. Nach einem anderen Verfahren können solche Kondensationsprodukte dadurch hergestellt werden, daß man ein Resol aus ein und/oder mehrkernigen Phenolen mit carboxylgruppenhaltigen Polyestern bei 80 bis 240°C umsetzt, die ein mittleres Molekulargewicht $\overline{Mn}$ von 300 bis 1500 und eine Säurezahl von 50 bis 150 mg KOH/g Festharz aufweisen.

Der phenolharzmodifizierte Polyester enthält bevorzugt eine Säurezahl von 3o bis 11o, besonders bevorzugt von 35 bis 7o.

Als nichtvergilbende Harze können carboxylgruppenhaltige Acrylatharze verwendet werden mit einer Säurezahl von 20 bis 120 und einer Hydroxylzahl von 0 bis 200. Bei Einsatz eines Harzes mit niedriger Säurezahl ist eine hohe Hydroxylzahl anzuwenden und umgekehrt. So kann beispielsweise mit einer Säurezahl von 25 und einer Hydroxylzahl von 150 ein lösliches Produkt hergestellt werden, das sich erfindungsgemäß porenfrei abscheiden läßt. Solche Harze werden nach dem Stand der Technik vorzugsweise durch radikalische Lösungspolymerisation bei Temperaturen von 60 bis 160°Caus $\alpha,\beta$-ungesättigten Mono- und Dicarbonsäuren und deren Estern mit linearen oder verzweigten aliphatischen und cycloaliphatischen Mono- und Polyalkoholen hergestellt, wobei die Polyalkohole nur mit einer Hydroxylgruppe verestert sind und die restlichen Hydroxylgruppen als potentielle Vernetzungsstellen erhalten bleiben. Als carboxylgruppenhaltige Monomere dienen beispielsweise Acrylsäure, Methacrylsäure, Crotonsäure, Maleinsäure-(anhydrid) oder Fumarsäure, bzw. Maleinsäure- oder Fumarsäure-monoester. Zu den (Meth)-acrylsäureestern und/oder Maleinsäure- und/oder Fumarsäuredialkylestern zählen beispielsweise n-Butylacrylat, tert-Butylacrylat, 2-Ethyl-hexylacrylat, Methylmethacrylat, Isopropylmethacrylat, Stearyl-methacrylat, Cyclohexylacrylat, Benzylacrylat und/oder auch entsprechende Crotonsäureester. Es können auch ungesättigte Ether wie Ethoxyethylmethacrylat oder Tetrahydrofurylacrylat eingesetzt werden. Zu den einpolymerisierbaren Monomeren gehören auch Vinylester von $\alpha$-verzweigten $C_2$ bis $C_{20}$-Alkancarbonsäuren, wie der Vinylester der Versaticsäure ®. Zu den Monomeren mit Hydroxylgruppen gehören Allylalkohol, Monovinylether von Polyolen, wie Monovinylether des Ethylenglykols und Butandiols, sowie hydroxylgruppenhaltige Allylether oder -ester, wie 2,3-Dihydroxyallylether, Trimethylolpropan-monoallylether oder 2.3-Dihydroxypropansäure-allylester. Besonders geeignet sind (Meth)acrylsäure-hydroxyalkylester, wie $\beta$-Hydroxypropylmethacrylat, Hydroxyethylacrylat, Butandiol-1,4-monoacrylat, 2.3-Dihydroxypropylmethacrylat, Polypropylenglykolmonoacrylat, oder auch Fumarsäure-dihydroxyalkylester.

Entsprechende Monomere können auch über (Meth)acrylamide hergestellt werden, wie Hydroxyethylacrylamid oder 2-Hydroxypropylmethacrylamid. Besonders elastische Eigenschaften werden beim Einsatz eines Reaktionsproduktes von Hydroxyalkyl(meth)acrylat mit $\epsilon$-Caprolacton erhalten.

Als Komponente B werden 5 bis 25 Gew.-% carboxylgruppenhaltiger Epoxidharze mit einer Säurezahl über 3o, bevorzugt von 45 bis 15o, besonders bevorzugt 65 bis 11o, eingesetzt, die durch Pfropfpolymerisation mit $\alpha,\beta$-ungesättigten Monocarbonsäuren, gegebenenfalls unter Zusatz von (Meth)acrylsäureestern und/oder (substituierten) Vinylaromaten hergestellt werden. Ihr Epoxid-Äquivalentgewicht beträgt 1ooo bis 5ooo, bevorzugt 1ooo bis 3ooo. Hierbei werden zunächst im wesentlichen alle Oxiranringe mit einer H-aciden Verbindung umgesetzt. Diese sind monofunktionelle Verbindungen, die keine Molekülvergrößerung bewirken, wie Benzoesäure oder tert. Butylbenzoesäure, Alkyl- oder Arylphenole wie tert.-Butylphenol oder Phenylphenol, Monoalkohole und/oder Monoepoxide. Bei Einsatz von bifunktionellen H-aciden Verbindungen wie Isophthalsäure oder Bisphenol A tritt eine Molekülvergrößerung ein. Die Steigerung des Molekulargewichts wird dabei durch die eingesetzten Mengenverhältnisse gesteuert. Die Pfropfung am aliphatischen C-Atom des modifizierten Epoxidharzes, das in organischen Lösemitteln wie Butanol oder Butoxyethanol gelöst ist, tritt bei Temperaturen von 110 bis 130°C bei Zusatz von mehr als 3 Gew.-%, bevorzugt 4 bis 8 Gew.-%, besonders bevorzugt 6 bis 7 Gew.-% Benzoylperoxid oder ähnlich wirkenden Initiatoren ein. Um die Pfropfungspolymerisation zu unterstützen, werden bevorzugt Epoxidharze mit einem höheren Epoxid-Äquivalentgewicht wie beispielsweise 2ooo bis 4ooo ausgewählt. Es werden mindestens 1.5, bevorzugt mindestens 5 Gewichtsteile, besonders bevorzugt mindestens 1o Gewichtsteile Monomermischung auf 1oo Gewichtsteile Epoxidharz eingesetzt. Überlegene Eigenschaften erhält man, wenn die Komponente B Epoxidharzmengen von mehr als 4o Gew.-%, bevorzugt mehr als 5o Gew.-%, besonders bevorzugt zwischen 6o und 9o Gew.-% enthält. Die Herstellung dieser Produkte ist in der DE-A-27 21 822 und DE-A-27 21 823 (US-PS-4 3o8 185 und 4 212 781) beschrieben. Bevorzugt werden acrylierte Epoxidharze, die nur mit Acrylsäure oder Methacrylsäure und Styrol pfropfpolymerisiert sind.

Um die in den Komponenten A und B vorhandenen Carboxyl- und Hydroxylgruppen zu vernetzen, werden 5 bis 40 Gew.-% eines oder mehrerer Aldehyd-Kondensationsharze als thermische Vernetzungsmittel zugesetzt. Hierunter werden verstanden Amin- und Phenol-Formaldehyd-Kondensationsharze, wie sie dem Stande der Technik entsprechen, aber auch Copolymerisate, die über eingebaute reaktive Monomere reagieren können. Diese Vernetzungsmittel (Komponente C) sind in den erfindungsgemäßen Bindemitteln (A und B) dispergierbar, wobei zum Verbessern der Löslichkeit gegebenenfalls Säuregruppen enthalten sein, können, die dem Harz eine Säurezahl bis zu etwa 80 mg KOH pro g Festharz geben.

Amin-Formaldehyd-Kondensationsharze entstehen durch Reaktion von Aldehyden mit Harnstoff, N-Alkyl-harnstoff, Dicyandiamid, verschiedenen Triazinen, wie Melamin, Benzoguanamin und Acetoguanamin oder ihren Mischungen. Die Aldehyde können dabei monofunktionell, aber auch polyfunktionell sein. Beispiele hierfür sind Formaldehyd und seine Polymerisationsprodukte, wie Paraformaldehyd, Polyoxymethylen, Trioxan, oder aliphatische und cyclische Aldehyde, wie Glyoxal, Acetaldehyd, Acrolein, Propionaldehyd, Butyraldehyd und Furfural. Je nach Reaktionsbedingungen und Methylolierungsgrad werden Harze mit verschiedenen Molekulargewichten und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkohol-, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, wie Cyclohexanol, oder Monoether von Ethylenglykolen, wie Ethoxyethanol- oder Butoxyethanol. Sollen Alkohole mit mehr als 4 C-Atomen eingebaut werden, so wird die Methylolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol. Besonders bevorzugt werden Melaminharze, die mit 3 bis 6 Molen Formaldehyd umgesetzt und anschließend vollständig mit Methanol verethert sind.

Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen.

Die bevorzugten Phenolharze sind Reaktionsprodukte von Phenol oder substituierten Phenolen mit verschiedenen Aldehyden im molaren Überschuß in Gegenwart alkalischer Katalysatoren (Resol-Typ.). Beispiele für phenolische Verbindungen sind Phenol, Kresol, Xylenol, Resorcin und substituierte Phenole wie p-tert.-Butylphenol, p-tert.-Amylphenol, p-Phenyl-phenol, Isothymol, Cardanol oder auch mehrkernige Phenole wie Dihydroxy-diphenylpropan (Bisphenol A) oder Dihydroxy-diphenylmethan. Als Ausgangsmaterial dienen auch phenolische Novolakharze, die gegebenenfalls mit Monocarbonsäuren, bevorzugt $\alpha$-verzweigten Monocarbonsäuren, Monophenolen, die besonders mit C2 bis C 18 Alkylgruppen substituiert sind oder auch Monoepoxiden wie $\alpha$-Monoepoxidalkane, Monoglyceridether oder Monoglyceridester, defunktionalisiert werden. Als Aldehyde finden Verwendung Formaldehyd und seine Polymerisationsprodukte wie

Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol. Bevorzugt werden Harze, die pro phenolischer OH-Gruppe mit überschüssigem Formaldehyd, d.h. etwa 1.1 bis 2.5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedenen Molekulargewichts verwendet werden. Hierfür geeignete Phenolcarbonsäuren sind beispielsweise 4,4-Bis-(4-hydroxyphenyl)-pentansäure, Glykolsäurederivate von Bis-phenolen, wie das 2-(4-Hydroxyphenyl)-2-(carbethoxyphenyl)propan, oder Salicylsäure. Gegebenenfalls können auch sehr niedrigmolekulare, gegebenenfalls ungesättigte, Methylolphenolether eingesetzt werden wie Trimethylolphenolallylether (Methylonharze, Warenzeichen).

Reaktive Mischpolymere, die mit Carboxylgruppen oder Hydroxylgruppen der Komponenten A und B vernetzen können, werden durch Copolymerisation von N-Methylol-ethern der (Meth)acrylamide oder Methylacrylamidoglycolat-methylether hergestellt. Neben diesen reaktiven Monomeren werden noch (Meth)-acrylsäureester, Hydroxyalkyl(meth)acrylate oder gegebenenfalls substituierte Vinylaromaten mit einpolymerisiert. Der Einbau von N-Methylolethern kann auch durch polymeranaloge Umsetzung von einpolymerisiertem (Meth)acrylamid mit Formaldehyd und Monoalkoholen erfolgen. Die Harze werden im allgemeinen durch Lösungspolymerisation bei einem Festkörper von 60 bis 90 Gew.-% unter Zusatz von radikalischen Initiatoren hergestellt.

Die Bindemittel werden mit den Neutralisationsmitteln einzeln oder im Gemisch neutralisiert und gegebenenfalls in Gegenwart von Lösemitteln mit entionisiertem oder destilliertem Wasser verdünnt. Als Neutralisationsmittel dienen beispielsweise leicht flüchtige Amine, wie Ammoniak, niedere primäre, sekundäre oder tertiäre Alkylamine, die beim Einbrennen leicht aus dem Film herausgehen. Es können jedoch auch schwerflüchtige Amine und/oder Aminoalkohole eingesetzt werden, wenn sie die Fähigkeit haben, durch geeignete Substituenten, wie Hydroxylgruppen, in den Filmverband fest einzureagieren. Beispiele für Amine sind Diethylamin, Triethylamin, n-Butylamin, Morpholin, N-Methylmorpholin, Aminoethanol, Diisopropanolamin, 2-Dimethylamino-2-methylpropanol, 2-Amino-2-methyl-1-propanol, Tris-(hydroxymethyl)-aminomethan, Methyldiethanolamin, Tri-ethanolamin. Der pH-Wert der Lacke liegt bevorzugt zwischen 7.0 und 8.5 Als Lösemittel sind geeignet primäre, sekundäre und/oder tertiäre Alkohole, Ethylen- oder Propylenglykol-mono- oder -diether, Diethylen- oder Dipropylenglykol-mono- oder -diether, Diacetonalkohol oder auch geringe Anteile von nicht wasserverdünnbaren Lösemitteln wie Benzinkohlenwasserstoffen, Hexylglykol, Phenoxypropanol und/oder 2.2.4-Trimethylpentandiol-1.3-monoisobuttersäureester. Sie sind notwendig, um ein Nachfüllmaterial mit verarbeitungsfähiger Viskosität zu erhalten, bei seinem aufgebrachten Film Oberflächenstörungen zu verhindern oder einen glatten Verlauf zu erhalten. Es wird ein möglichst niedriger Gehalt an organischen Lösemitteln im verarbeitungsfähigen Lack angestrebt. Elektrotauchlacke enthalten zweckmäßig unter 15 Gew.-%, vorzugsweise unter 5 Gew.-% Lösemittel, denn mit steigendem Lösemittelgehalt verschlechtert sich der für die Lackierung notwendige Umgriff.

Der Badfestkörper gemäß der Erfindung beträgt nach Verdünnen mit Wasser 5 bis 60 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden. Verdünnt man dagegen auf einen Feststoffgehalt von 5 bis 30 Gew.-%, vorzugsweise 8 bis 20 Gew.-%, so ist der Lack für die elektrophoretische Abscheidung geeignet.

Mit steigendem Festkörper wird die Badleitfähigkeit erhöht und das Abscheideäquivalent (Ampere x sec/g) herabgesetzt, wodurch der Umgriff gesteigert werden kann. Durch die hohe Konzentration an schichtbildenden Ionen geht dabei der spezifische Schichtwiderstand durch ein Maximum. Er beträgt bevorzugt $1000\text{-}5000 \cdot 10^5$ Ohm $\cdot$ cm.

Die Badtemperatur liegt zwischen 20 und 35 °C. Mit fallender Temperatur erhöht sich der Umgriff. Temperaturen unter 20°C sind unwirtschaftlich, weil die bei der ETL-Beschichtung entstehende Wärme durch viel Kühlwasser wieder abgeführt werden muß. Temperaturen über 35°C erschweren die Badführung, weil zu viel Lösemittel verdunstet und Hydrolyseerscheinungen am Bindemittelsystem Schwankungen in den elektrischen Daten erzeugen.

Das Überzugsmittel kann zusätzlich übliche lacktechnische Hilfsmittel wie Katalysatoren, Verlaufmittel, Antischaummittel, Gleitmittel usw. enthalten. Naturgemäß sind solche Zusatzstoffe auszuwählen, die mit Wasser bei dem pH-Wert des Bades keine störenden Reaktionen eingehen, keine störenden Fremdionen einschleppen und bei längerem Stehen nicht in nichtaufrührbarer Form ausfallen.

Die Bindemittel können pigmentiert oder unpigmentiert eingesetzt werden. Als Pigmente und Füllstoffe können gegebenenfalls solche Materialien eingesetzt werden, die aufgrund ihrer geringen Teilchengröße

unter 10 µm, besonders unter 5 µm, in den Lack stabil eindispergiert werden können und sich beim Stehen wieder aufrühren lassen. Sie dürfen keine störenden Fremdionen enthalten und dürfen mit Wasser oder dem Neutralisationsmittel nicht chemisch reagieren. Die Pigmentierung kann sowohl weiß als auch farbig sein; weiß wird bevorzugt. Bei zusätzlichem Einbau von Interferenzpigmenten ist es möglich, Metall-Effekt-Lackierungen wie Aluminium-, Silber-, Messing-, Kupfer-, Gold-Effekte zu erzielen. Pigmente wie Titandioxid werden in einem konzentrierten Mahlgut angerieben und danach mit weiterem Bindemittel auf ein Pigment-Bindemittel-Verhältnis von etwa 0.1 : 1 bis 0.7 : 1 eingestellt. Durch Einbau von Pigmenten wird der Umgriff gesteigert.

Anstelle von Pigmenten können fein pulverisierte, nicht lösliche Harze wie pulverisierte Polykohlenwasserstoffharze, Epoxidharze oder blockierte Polyisocyanate eingesetzt werden, wobei die Zusatzmengen so ausgewählt werden, daß sie das Maximum des Schichtwiderstandes nicht überschreiten. Bindemittel, Pigmentgehalt, Badfestkörper, Lösmittelgehalt, Auswahl und Menge des Neutralisationsmittels werden so mit den Beschichtungsbedingungen wie Badtemperatur, Abscheidespannung und Abscheidezeit abgestimmt, daß im Elektrotauchlackbad (ETL-Bad) eine vollständige Beschichtung erfolgt, die nach Einbrennen im Inneren der Dose bei Schichtdicken von mindestens 3 µm, bevorzugt mindestens 4 µm, ganz bevorzugt mindestens 5 µm und höchstens 10 µm, besonders höchstens 7 µm porenfrei ist.

Die Elektrotauchlackierung (ETL) erfolgt in einem offenen Tauchbad, das ständig gerührt und umgepumpt wird, um ein Absetzen von dispergierten Harzteilchen und Pigmenten zu vermeiden. Die Beschichtung erfolgt mit Gleichstrom von 50 bis 500 Volt, wobei der zu beschichtende Gegenstand als Anode geschaltet ist. Die Beschichtungszeit liegt zwischen 1 Sekunde und 3 Minuten. Emballagendosen werden mit sehr kurzen Zeiten (etwa 5 bis 20 Sekunden), normale Industriegegenstände mit Hohlräumen 2 bis 3 Minuten beschichtet. Die Schichtdicke wird durch die gewählte Zeit und Spannung gesteuert. Nach Abspülen mit gegebenenfalls Ultrafiltrat und Wasser wird der Lack bei Temperaturen von 1 Sekunde bis zu 30 Minuten bei Temperaturen von 150 bis 250°C eingebrannt. Die dünnen Schichten der Getränkedosen werden durch eine Schocktrocknung mit kurzen Zeiten und hohen Temperaturen (1 Sekunde bis 250 Sekunden bei Temperaturen von 200 bis 230°C) gehärtet. Größere Industriegegenstände brauchen mit ihrer dickeren Lackschicht zum Erwärmen der Masse eine längere Zeit und werden dann mit einer niedrigeren Temperatur eingebrannt, beispielsweise 25 Minuten bei 175°C.

Die Lacke sind besonders für die Elektrotauchlackierung von Getränke- und Konservendosen geeignet und geben glatte, harte und elastische Filme mit guter Haftfestigkeit, die praktisch keine Poren mehr enthalten, und sich in den Lagerversuchen einwandfrei verhalten. Die Porigkeit wird dadurch festgestellt, daß die Prüfdose mit einem Elektrolyten gefüllt und durch Anlegen einer Prüfspannung von 4 Volt festgestellt wird, ob die Isolierwirkung des Films über einen Zeitraum von 30 Sekunden ausreichend ist. Bei Lagerversuchen mit Füllgütern wird festgestellt, ob Eisen-Ionen in die Lösung wandern bzw. wann Lochfraß auftritt. Es können jeweils Gemische der einzelnen Komponenten eingesetzt werden.

Die Viskosität des Überzugsmittels wird in an sich bekannter Weise entsprechend der gewünschten Applikationsart eingestellt. Es ist dem Fachmann bekannt, daß zur Elektrotauchlackierung relativ niedrige Viskositäten zweckmäßig sind, während bei anderen Applikationsarten wie Tauchen, Fluten, Spritzen, Aufwalzen oder Aufgießen höhere Viskositäten notwendig oder zweckmäßig sind. Das Spritzen kann z.B. mit Hilfe von Spritzpistolen entweder airless oder mit Druckluft erfolgen. Bei elektrostatischer Lackierung werden durch die angelegte Hochspannung die einzelnen Lacktröpfchen aufgeladen und durch ihre elektrische Ladung auf das Werkstück aufgebracht. Um einen Zusammenbruch des elektrischen Feldes am Sprühorgan zu verhindern, werden in bekannter Weise externe Hochspannungselektroden verwendet. Für eine gute Zerstäubung wird in bekannter Weise Druck- oder Rotationsenergie eingesetzt, wie dies für Wasserlacke gebräuchlich ist.

Epoxidharz-Phosphorsäureester A 1

(Beispiel 1 der DE-A-27 57 733 (US-A-4 164 487))

333 g eines Epoxidharzes auf Basis Bisphenol A mit einem Epoxidäquivalentgewicht von 905 wurde in 333 g Dioxan unter Erwärmen und gutem Rühren gelöst. Bei 70°C wurden 333 g einer 10 %igen Lösung von Ortho-Phosphorsäure in Dioxan zugegeben. Die Mischung wurde zum Sieden unter Rückflußkühlung erwärmt (etwa 100°C) und bei dieser Temperatur 3 Stunden lang gehalten. Nach dem Abkühlen auf Raumtemperatur betrug die Säurezahl 96 bezogen auf einen Festkörper von 37.7 Gew.-% (30 Minuten Erwärmen bei 180°C im Umlufttrockenschrank).

Epoxidharz-Phosphorsäureester A 2

914 g Polyglycidylether auf Basis Bisphenol A mit einem Epoxid-Äquivalentgewicht von 225o werden unter Erwärmen auf 125°C in 440 g Butoxyethanol gelöst. 19.2 g 85 %ige Orthophosphorsäure werden mit 1oo g Butoxyethanol verdünnt und innerhalb von 3o Minuten unter kräftigem Rühren bei 125°C zugegeben. Diese Temperatur wird 2 Stunden bis zur vollständigen Umsetzung der Orthophosphorsäure gehalten und dann auf 115°C abgekühlt. In das druckfest verschlossene System werden vorsichtig 1o g Wasser unterhalb der Oberfläche zugegeben, wobei der Druck vorübergehend leicht ansteigt. Anschließend wird zum Vervollständigen der Hydrolyse zwei Stunden bei 115°C gehalten. Nach Zusatz von 1o g 2-Dimethyl-2-methylpropanol (8o %ig in Wasser) wird mit 1426 g vollentsalztem Wasser verdünnt.
Endwerte:

| | |
|---|---|
| Festkörper: | 32 Gew.-% (nach einstündigem Erwärmen im Umlufttrockenschrank auf 15o°C) |
| Säurezahl: | ca. 2o (mg KOH pro g Festharz) |

Epoxidharz-Trimellithsäureester A 3

(Beispiel 1 nach DE-C-27 47 818)

655 g eines Epoxidharzes auf Basis Bisphenol A und einem Epoxidäquivalentgewicht von 188 wurde mit 492 g Bisphenol A gemischt und schnell innerhalb einer halben Stunde auf 140°C erhitzt. Nach 2 Stunden wurde auf 160°C erwärmt und diese Temperatur gehalten, bis der Epoxidwert 0.01 betrug. Nach Verdünnen mit 302 g Methylisobutylketon wurden 92.8 g Trimellithsäureanhydrid zugegeben und 4 Stunden bei 120°Cgehalten. Nach Zusatz von 279 g Butoxyethanol wurden 135 g Methylisobutylketon abdestilliert und bei 100°C 279 g tert.-Butanol und 410 g Butoxyethanol zugegeben.

| | |
|---|---|
| Festkörper: | 56.7 Gew.-% (30 min 180°C) |
| Säurezahl : | 46 (bezogen auf Festharz) |
| Viskosität: | 18 Pas (nach Weiterverdünnen mit Butoxyethanol auf einen Festkörper von 50 Gew.-%) |

Phenolharz-modifizierter Polyester A 4

(Beispiel 1 der EP-B-0 062 786)

672.4 g Hexandiol-1.6 und 142.4 g Isophthalsäure werden unter Zusatz von 140 g Methylisobutylketon bis auf etwa 160°C aufgeheizt. Das Reaktionswasser wird aceotrop entfernt, bis die Säurezahl etwa 60 mg beträgt. Nach Abziehen des Lösemittels unter Vakuum bei 110°C werden 512.8 g Trimellithsäureanhydrid zugegeben und auf 145°C geheizt. Es wurde solange gehalten, bis die Viskosität einer 50 %igen Lösung in Butoxyethdnol 130 mPas beträgt. Nach Abkühlen auf 120°C werden 455.8 g p-tert-Butylphenol und 216.6 g Paraformaldehyd zugesetzt. Es wurde zunächst bei 120°C, später bei 140°C gehalten, bis die Viskosität einer 50 %igen Lösung in Butoxyethanol 440 mPas beträgt. Es wurde abgekühlt und mit 410 g Butoxyethanol verdünnt.

| | |
|---|---|
| Festkörper: | 75.9 Gew.-% (30 min 180°C) |
| Säurezahl : | 110 (bezogen auf Festharz) |

Phenolharz-modifizierter Polyester A 5

In einem mit Rührwerk, Thermometer und Kondensatabscheider ausgestattetem Dreihals-Kolben wird aus 3 Mol Hexandiol-1.6, 1 Mol Adipinsäure, 1 Mol Trimethylolpropan, 1 Mol Isophthalsäure und 1 Mol Trimellithsäureanhydrid unter Inertgas-Atmosphäre bei langsam ansteigenden Temperaturen von 16o bis 22o°C ein Polyester unter Abspalten von Reaktionswasser hergestellt.
Kennwerte:

| | |
|---|---|
| Säurezahl: | ca. 7o mg KOH pro g Festharz |
| Viskosität: | 46o mPas der 5o %igen Harzlösung in Buthoxyethanol bei 25°C |

1178 g dieses Polyesters werden bei 1oo bis 11o°C umgesetzt mit 635 g eines Bisphenolresols, das in bekannter Weise durch alkalische Kondensation von 1 Mol Bisphenol A mit 3 Mol Formaldehyd hergestellt wurde. Nach Erreichen einer Viskosität von 145o mPas, gemessen in 5o %iger Lösung in Buthoxyethanol bei 25°C, wird mit Buthoxyethanol auf einen Festkörper von 80 Gew.-% verdünnt und filtriert.

Acrylatharz A 6

In einem mit Rührer, Thermometer und Tropftrichter ausgerüsteten Dreihalskolben werden 2123 g

Methoxypropanol eingefüllt und auf ca. 113°C erwärmt. Anschließend wird ein Gemisch von 1664 g Butylacrylat, 219 g Acrylsäure, 766 g eines mit Butanol veretherten Methylolacrylamids,
359 g Methylmethacrylat, 796 g Styrol und 36 g tert.-Butylperoxy-2-ethylhexanoat innerhalb von 4 Stunden gleichmäßig zugesetzt. Zum Auspolymerisieren wird 1 Stunde bei 113°Cgehalten, 18 g tert.-Butyl-peroxy-2-ethylhexanoat zugegeben, wieder 1 Stunde gehalten und diese Operation noch einmal wiederholt. Zum Schluß wird bis zum Sieden erhitzt und 2 Stunden bei dieser Temperatur gehalten. Anschließend wurden unter Vakuum 56o g abdestilliert.

| | |
|---|---|
| Festkörper: | 67.4 Gew.-% (3o min bei 15o°C) |
| SZ | = 46 |
| Viskosität: | 12.6 Pas nach Verdünnen auf FK 6o % |

Acryliertes Epoxidharz B 1

(Beispiel 1 der DE-A-27 21 822 (GB-A-1 585 486))

549 g Epoxidharz auf Basis Bisphenol A mit einem Epoxidäquivalentgewicht von 188 werden unter Rühren auf etwa 80°C erwärmt und dann 277 g Bisphenol A zugegeben. Es wurde innerhalb 2 Stunden auf 190°C aufgeheizt und diese Temperatur gehalten, bis ein Epoxidäquivalentgewicht von 1200 erreicht war. Unter Zusatz von 320 g Butoxyethanol und 480 g n-Butanol wurde auf 120°C gekühlt. Die Viskosität der erhaltenen Lösung betrug 3.3 Pas. Innerhalb 2 Stunden wurde dann ein Gemisch von 151.4 g Methacrylsäure, 94 g Styrol, 104.4 g Ethylacrylat und 23.6 g Benzoylperoxid langsam bei 120°C zugetropft und anschließend noch 3 Stunden lang gehalten.

| | |
|---|---|
| Festkörper: | 60.7 Gew.-% (30 min 150°C) |
| Säurezahl : | 86 (bezogen auf Festharz) |
| Viskosität: | 2.35 Pas (nach Verdünnen auf 50 Gew.-% mit Butoxyethanol- |

Acryliertes Epoxidharz B 2

826 g Polyglycidylether auf Basis Bisphenol A mit einem Epoxid-Äquivalentgewicht von 225o werden unter Erwärmen auf etwa 125°C in 25o g Butoxyethanol und 38o g n-Butanol gelöst. Bei dieser Temperatur werden innerhalb von 2 Stunden eine Monomerenmischung aus 13o g Methacrylsäure, 11o g Styrol und 16 g Benzolperoxid gleichmäßig zugegeben. Zum Auspolymerisieren wird anschließend noch 3 Stunden bei ca. 125°C unter Rühren gehalten. Nach Zusatz von 125 g 2-Dimethyl-2-methylpropanol (8o %ig in Wasser) wird mit 262o g vollentsalztem Wasser verdünnt.

Endwerte:

| | |
|---|---|
| Festkörper: | 24 Gew.-% (nach einstündigem Erwärmen im Umlufttrockenschrank auf 15o°C) |
| Säurezahl : | ca. 8o (mg KOH pro g Festharz) |

Phenolharz C 1

462 g Paraformaldehyd (91 %ig), 830 g destilliertes Wasser, 66.7 g Methanol und 1.5 g NaOH wurden gemischt und unter Rühren schnell auf 60°C erwärmt. Diese Temperatur wird gehalten, bis die Lösung klar ist. Nach Abkühlen auf Raumtemperatur werden 798 g Bisphenol A eindispergiert. Nach Zusatz von 723 g 33 %iger Natronlauge bei etwa 40 bis 45°Cwird gehalten, bis der Gehalt an freiem Formaldehyd nicht mehr absinkt. Nach Abkühlen des Ansatzes werden 1300 g n-Butanol zugegeben und bei 35°C etwa 300 ml Butanol-Wasser-Gemisch abdestilliert. Nach Zugabe von 80 g Toluol wird das entstehende Wasser bei langsam ansteigenden Temperaturen von 95 bis 115°C ausgekreist. Dann wird unter Vakuum bis auf einen Festkörper von etwa 65 Gew.-% eingeengt.

| | |
|---|---|
| Festkörper: | 66.6 Gew.-% (1 Stunde 120°C) |
| Viskosität: | 28 Pas bei 25°C |

Melaminharz C 2

Ein Reaktionsgemisch aus 1 Mol Melamin, 4.6 Mol Formaldehyd (Anwendungsform: Paraformaldehyd 91%) und 7 Mol Butanol wird in Gegenwart von o.o5 Gew.-% Phthalsäureanhydrid zum Sieden erhitzt und 1 Stunde kondensiert, wobei das Reaktionswasser abgetrennt wird. Man kühlt nun auf 9o°C und gibt 5 Gew.-% Xylol hinzu. Das Reaktionsgemisch wird erneut zum Sieden erhitzt und aceotrop kondensiert, bis eine Verträglichkeit mit einem Gemisch aus 1oo Gew.-Teilen n-Heptan und 2o Gew.-Teilen Toluol von ca. 15 ml

bei 2 g Einwaage erreicht ist. Anschließend konzentriert man das Reaktionsprodukt auf einen Einbrenn-Rückstand (1 Stunde 12o°C) von 55 Gew.-% auf. Die so hergestellte Harzlösung weist eine Viskosität von 15o bis 25o mPas, eine Verträglichkeit mit einem Gemisch aus 1oo Teilen n-Heptan und 2o Teilen Toluol von 1o bis 2o ml bei 2 g Einwaage, eine Säurezahl von ≦ 1 und eine Hazen-Farbzahl von ≦ 2o auf.
Festkörper: 56 Gew.-%

Vergleichsversuch 1

169.3 g Epoxidharz A 3 werden mit 96.2 g Phenolharz C 1 gemischt, gemeinsam mit 8.1 g 2-Dimethylamino-2-methylpropanol (80 %ig in Wasser) neutralisiert und mit vollentsalztem Wasser auf 1 Liter verdünnt. Diese Badflüssigkeit wird in eine tiefgezogene, abgestreckte zweiteilige Getränkedose aus verzinntem Stahlblech mit einem Durchmesser von 65 mm und einer Höhe von 112 mm gefüllt. Die gebördelte und außen bedruckte Dose wird über den Boden als Anode geschaltet. Als Kathode dient ein Stab aus nichtrostendem Stahl von 6 mm Durchmesser, der in der Dosenmitte etwa 60 mm tief eingetaucht wird. Die Eigenschaften der Elektrophoresebäder und der Beschichtung werden in Tabelle 1 zusammengefaßt.
Verhältnis der Komponenten (fest auf fest)
A3 : C1 = 60 : 40

Beispiel 1

190.5 g Epoxidharz-Phosphorsäureester A 1 werden gemischt mit 65.3 g Phenolharz C 1 und 24.4 g acryliertem Epoxidharz B 1, dann gemeinsam mit 9.3 g 2-Dimethylamino-2-methylpropanol (80 %ig in Wasser) neutralisiert und mit vollentsalztem Wasser auf 1 Liter verdünnt.
Verhältnis der Komponenten (fest auf fest)
A1 : B1 : C1 = 55 : 12 : 33

Beispiel 2

93.0 g Phenolharz-modifizierter Polyester A 4 werden gemischt mit 83.3 g Phenolharz C 1 und 39.5 g acryliertem Epoxidharz B 1, dann gemeinsam mit 8.1 g 2-Dimethylamino-2-methylpropanol (80 %ig in Wasser) neutralisiert und mit vollentsalztem Wasser auf 1 Liter verdünnt.
Verhältnis der Komponenten (fest auf fest)
A4 : B1 : C1 = 47 : 16 : 37

Beispiel 3

145.7 g Epoxidharz-Trimellithsäureester A 3 werden gemischt mit 82.7 g Phenolharz C 1 und 36.9 g acryliertem Epoxidharz B 1, dann gemeinsam mit 11.2 g 2-Dimethylamino-2-methylpropanol (80 %ig in Wasser) neutralisiert und mit vollentsalztem Wasser auf 1 Liter verdünnt. Die Abscheidungsbeispiele 3a und 3b unterscheiden sich im eingesetzten Dosenmaterial.
Verhältnis der Komponenten (fest auf fest)
A3 : B1 : c1 = 52 : 14 : 34

Tabelle 1

| | Vergleichsversuch 1 | Beispiel 1 | Beispiel 2 | Beispiel 3a | Beispiel 3b |
|---|---|---|---|---|---|
| Festkörper (25 min 180°C) | 16.4 Gew.-% | 13.4 Gew.-% | 14.4 Gew.-% | 15.0 % | |
| pH-Wert | 7.1 | 6.9 | 7.5 | 7.7 | |
| Badleitfähigkeit | 1136 $\mu Scm^{-1}$ | 1709 $\mu Scm^{-1}$ | 1710 $\mu Scm^{-1}$ | 1434 $\mu Scm^{-1}$ | |
| MEQ-Wert | etwa 40 | etwa 50 | etwa 80 | etwa 50 | |
| Badtemperatur | 25°C | 25°C | 25°C | 25°C | |
| Abscheidespannung | 140 V | 150 V | 110 V | 80 V | 90 V |
| Abscheidezeit | 23 sec | 23 sec | 24 sec | 35 sec | 18 sec |
| Abscheideäquivalent | 60 C/g | 110 C/g | 105 C/g | 60 C/g | 35 C/g |
| Einbrenntemperatur | 5min 225°C | 5min 225°C | 5min 225°C | 5min 225°C | 5min 225°C |
| Dosenmaterial | Weißblech | Weißblech | Weißblech | Weißblech | Aluminium |
| Dosenauflage | 268 mg/Dose | 319 mg/Dose | 212 mg/Dose | 264 mg/Dose | 150 mg/Dose |
| Porigkeit (30 sec bei 4 V) | 7.1 mA | 1.6 mA | 1.0 mA | $< 1$ mA | $< 1$ mA |
| Haftung nach Sterilisation mit Wasser (30 min 85°C) | fast i.O. | i.O. | i.O. | i.O. | i.O. |

**i.O. = in Ordnung**

Beispiel 4

257.8 g Epoxidharz-Phosphorsäureester A 2 werden gemischt mit 88.4 g Melaminharz C 2 und 75 g acryliertes Epoxidharz B 2, dann gemeinsam mit 5.5 g 2-Dimethylamino-2-methylpropanol (80 %ig in

Wasser) neutralisiert und mit 573 g vollentsalztem Wasser verdünnt.
Verhältnis der Komponenten (fest auf fest)
A2 : B2 : C2 = 55 : 12 : 33

Beispiel 5a

161.2 g Phenolharz-modifizierter Polyester A 5 werden gemischt mit 127.2 g eines mit Methanol vollveretherten Hexamethylolmelamins (FK = 92%) und 225 g acryliertem Epoxidharz B 2, dann gemeinsam mit 8.8 g 2-Dimethylamino-2-methylpropanol (80 %ig in Wasser) neutralisiert und mit 325 g vollentsalztem Wasser verdünnt.
Verhältnis der Komponenten (fest auf fest)
A 5 : Melaminharz : B 2 = 43 Teile : 39 Teile : 18 Teile
Der Lack hat einen Festkörper von 33.5 g Gew.-% und bei 25°Cim Auslaufbecher mit 4mm Düse (nach DIN 53 211) eine Viskosität von 27 Sekunden. Es wurde bei einem halben Kreuzgang eine glatte Oberfläche mit 3 µm Schichtdicke nach dem Einbrennen gespritzt.

Beispiel 5b

Verdünnt man die neutralisierte Harzmischung mit 1177 g vollentsalztem Wasser, so wird ein Lack erhalten, der elektrophoretisch aufgetragen werden kann.

Vergleichsversuch 2

(entsprechend EP-A-O 174 628)

222.5 g Epoxidharz-Phosphorsäureester A 2 werden gemischt mit 26.7 g Acrylatharz A 6, und 72.2 g Phenolharz C 1, dann gemeinsam mit 4.1 g 2-Dimethylamino-2-methylpropanol (80 %ig in Wasser) neutralisiert und mit 675 g vollentsalztem Wasser verdünnt.
Verhältnis der Komponenten (fest auf fest)
A2 : A6 : C2 = 52 : 13 : 35

Tabelle 1

| | Beispiel 4 | Vergleichsversuch 2 |
|---|---|---|
| Festkörper (25 min 18o $^{\circ}C$) | 13,4 Gew.-% | 12,3 Gew.-% |
| pH-Wert | 1o,2 | 1o,2 |
| Badleitfähigkeit | 785 µS/cm | 346 µS/cm |
| MEQ-Wert | ~ 4o | ~ 3o |
| Badtemperatur | 25 $^{\circ}C$ | 25 $^{\circ}C$ |
| Abscheidespannung | 1oo V | 14o V |
| Abscheidezeit | 15 sec | 13 sec |
| Abscheideäquivalent | 52,5 C/g | 29,5 C/g |
| Einbrenntemperatur | 5 min 225 $^{\circ}C$ | 5 min 225 $^{\circ}C$ |
| Dosenmaterial | Weißblech | Weißblech |
| Dosenauflage | 2o8mg/Dose | 271mg/Dose |
| Haftung nach Sterilisation mit Wasser (3o min 85 $^{\circ}C$) | 1.O. | nicht 1.O. |

## Patentansprüche

**1.** Verfahren zum Beschichten von Gegenständen mit elektrisch leitender Oberfläche mittels anodischer Elektrotauchlackierung, **dadurch gekennzeichnet,** daß die Beschichtung mit einem wäßrigen, hitzehärtbaren Überzugsmittel durchgeführt wird, das als Bindemittel enthält ein Gemisch aus

85 bis 4o Gew.-% mit Base jeweils neutralisiertem carboxyl- und/oder phosphorsäurehaltigem Epoxidharz, Acrylatharz oder Polyester als Basisharz mit einer Säurezahl von 1o bis 175 und einem mittleren Molekulargewicht $\overline{M}n$ von 1ooo bis 1oooo (Komponente A)

5 bis 25 Gew.-% Epoxidharz-Pfropfpolymerisat mit einer Säurezahl von 3o bis 2oo, hergestellt aus einem epoxidgruppenfreien Reaktionsprodukt von fettsäurefreien Polygly-

| | |
|---|---|
| | cidylethern mit mehr als 1.3 Epoxidgruppen pro Molekül und einem Epoxid-Äquivalentgewicht von 1ooo bis 5ooo mit $\alpha,\beta$-ungesättigten Monocarbonsäuren (Komponente B) |
| 5 bis 4o Gew.-% | vollverethertes Amin-Formaldehyd-Kondensationsharz und/oder vollverethertes Phenol-Formaldehydkondensationsharz mit im Durchschnitt mindestens 2 reaktiven Stellen pro Molekül (Komponente C), |

sowie organisches Lösemittel in einer Menge bis zu 2o Gew.-% bezogen auf das Gesamtgewicht des Überzugsmittels, gegebenenfalls übliche Lackzusatzstoffe sowie gegebenenfalls Pigmente und/oder Füllstoffe,

**2.** Wäßriges, hitzehärtbares Überzugsmittel auf Epoxidharz-Acrylatharz- oder Polyesterbasis im Gemisch mit Aldehyd-Kondensationsharz als Vernetzungsmittel, sowie mit organischem Lösemittel in einer Menge bis zu 2o Gew.-% bezogen auf das Gesamtgewicht des Überzugsmittels, und gegebenenfalls üblichen Lackzusatzstoffen sowie gegebenenfalls Pigmenten und/oder Füllstoffen, **dadurch gekennzeichnet,** daß es als Bindemittel enthält

| | |
|---|---|
| 85 bis 4o Gew.-% | mit Base jeweils neutralisiertem carboxyl- und/oder phosphorsäurehaltigem Epoxidharz, Acrylatharz oder Polyester als Basisharz mit einer Säurezahl von 1o bis 175 und einem mittleren Molekulargewicht $\overline{Mn}$ von 1ooo bis 1oooo (Komponente A) |
| 5 bis 24. Gew.-% | Epoxidharz-Pfropfpolymerisat mit einer Säurezahl von 3o bis 2oo, hergestellt aus einem epoxidgruppenfreien Reaktionsprodukt von fettsäurefreien Polyglycidylethern mit mehr als 1.3 Epoxidgruppen pro Molekül und einem Epoxid-Äquivalentgewicht von 1ooo bis 5ooo mit $\alpha,\beta$-ungesättigten Monocarbonsäuren (Komponente B) |
| | und |
| 5 bis 4o Gew.-% | vollverethertes Phenol-Formaldehydkondensationsharz mit im Durchschnitt mindestens 2 reaktiven Stellen pro Molekül (Komponente C). |

**3.** Überzugsmittel nach Anspruch 2, dadurch gekennzeichnet, daß es als Bindemittel enthält:

| | |
|---|---|
| Komponente A: | 75 bis 45 Gew.-% |
| Komponente B: | 1o bis 2o Gew.-% |
| Komponente C: | 1o bis 35 Gew.-%. |

**4.** Überzugsmittel nach Anspruch 2 oder 3, dadurch gekennzeichnet, daß die Komponente A ein fremdvernetzendes, gegebenenfalls (Alkyl)vinylaromaten enthaltendes (Meth)acrylatharz mit einer Säurezahl von 2o bis 12o und einer OH-Zahl von 0 bis 2oo ist.

**5.** Überzugsmittel nach Anspruch 2 oder 3, dadurch gekennzeichnet, daß die Komponente A ein fettsäurefreier, saurer Epoxidharz-Phosphorsäureester mit einer Säurezahl von 1o bis 15o, hergestellt aus einem epoxidgruppenhaltigen Polyglycidylether und/oder Polyglycidyl(meth)acrylatharz mit mehr als 1.3 Epoxidgruppen pro Molekül und mit einem Epoxid-Äquivalentgewicht von 18o bis 5ooo, ist.

**6.** Überzugsmittel nach Anspruch 2 oder 3, dadurch gekennzeichnet, daß die Komponente A ein fettsäurefreier, saurer Epoxidharz-Carbonsäureester mit einer Säurezahl von 25 bis 1oo ist, der hergestellt wurde durch Umsetzung von einem epoxidgruppenhaltigen Harz mit mehr als 1.3 Epoxidgruppen pro Molekül und einem Epoxid-Äquivalentgewicht von 18o bis 25oo mit Mono(alkyl)phenolen und/oder überschüssigen mehrkernigen Phenolen und anschließende Reaktion des so erhaltenen epoxidgruppenfreien Reaktionsproduktes mit cyclischen Carbonsäureanhydriden.

**7.** Überzugsmittel nach Anspruch 2 oder 3, dadurch gekennzeichnet, daß die Komponente A ein phenolharzmodifizierter, carboxylgruppenhaltiger, ölfreier Polyester mit einer Säurezahl von 15 bis 175 und einer OH-Zahl von 15 bis 175 ist.

**8.** Überzugsmittel nach einem der Ansprüche 2 bis 7, dadurch gekennzeichnet, daß die Komponente A ein Gemisch aus einem fettsäurefreien, sauren Epoxidharz-Phosphorsäureester mit einer Säurezahl von 1o bis 15o, hergestellt aus einem epoxidgruppenhaltigen Polyglycidylether und/oder Polyglycidyl(meth)acrylatharz mit mehr als 1.3 Epoxidgruppen pro Molekül und mit einem Epoxid-Äquivalentgewicht von

18o bis 5ooo und einem phenolharzmodifizierten, carboxylgruppenhaltigen, ölfreien Polyester mit einer Säurezahl von 15 bis 175 und eine OH-Zahl von 15 bis 175 ist.

**9.** Überzugsmittel nach einem der Ansprüche 2 bis 8, dadurch gekennzeichnet, daß die Komponente A ein Gemisch ist aus 4o bis 8o Gew.-% eines fettsäurefreien, sauren Epoxidharz-Phosphorsäureesters mit einer Säurezahl von 15 bis 4o und 2o bis 6o Gew.-% eines phenolharzmodifizierten, carboxylgruppenhaltigen, ölfreien Polyesters mit einer Säurezahl von 35 bis 7o.

**10.** Verwendung des Überzugsmittels nach Anspruch 2 bis 9 zum Beschichten von Substraten.

**11.** Beschichtete Gegenstände, die mit einem wäßrigen, hitzehärtbaren Überzugsmittel beschichtet und eingebrannt sind, **dadurch gekennzeichnet,**
daß sie mit einem Überzugsmittel gemäß Ansprüchen 2 bis 9 beschichtet sind.

**12.** Beschichtete Gegenstände nach Anspruch 11, dadurch gekennzeichnet, daß es Metallgegenstände sind.

**13.** Beschichtete Gegenstände nach Anspruch 11, dadurch gekennzeichnet, daß sie durch anodische Tauchlackierung beschichtet sind.

**14.** Beschichtete Gegenstände nach Ansprüchen 11 bis 13, dadurch gekennzeichnet, daß es Getränke- oder Konserven-Dosen sind.

**Claims**

**1.** A process for coating articles with electrically conductive surface by means of anodic electrocoating, characterized in that the coating is carried out with an aqueous, heat-curable coating agent that contains as binder a mixture of

| | |
|---|---|
| 85 to 40 wt% | carboxylic- and/or phosphoric-acid-containing epoxy resin, acrylate resin or polyester, neutralized with base in each case, as base resin, with an acid number of 10 to 175 and a number-average molecular weight $\overline{M}n$ of 1000 to 10,000 (component A), |
| 5 to 25 wt% | epoxy resin graft polymer with an acid number of 30 to 200, produced from an epoxy-group-free reaction product of fatty-acid-free polyglycidyl ethers with more than 1.3 epoxy groups per molecule and an epoxide equivalent weight of 1000 to 5000 with $\alpha,\beta$-unsaturated monocarboxylic acids (component B), and |
| 5 to 40 wt% | fully etherified amine-formaldehyde condensation resin and/or fully etherified phenol-formaldehyde condensation resin with on average at least 2 reactive positions per molecule (component C), |

as well as organic solvent in an amount of up to 20 wt% relative to the total weight of the coating agent, optionally conventional lacquer additives and optionally pigments and/or extenders.

**2.** An aqueous heat-curable coating agent based on epoxy resin, acrylate resin or polyester, mixed with aldehyde condensation resin as cross-linking agent, as well as with organic solvent in an amount of up to 20 wt% relative to the total weight of the coating agent and optionally conventional lacquer additives as well as optionally pigments and/or extenders, characterized in that it contains as binder

| | |
|---|---|
| 85 to 40 wt% | carboxylic- and/or phosphoric-acid-containing epoxy resin, acrylate resin or polyester, neutralized with base in each case, as base resin, with an acid number of 10 to 175 and a number-average molecular weight $\overline{M}n$ of 1000 to 10,000 (component A), |
| 5 to 24 wt% | epoxy resin graft polymer with an acid number of 30 to 200, produced from an epoxy-group-free reaction product of fatty-acid-free polyglycidyl ethers with more than 1.3 epoxy groups per molecule and an epoxide equivalent weight of 1000 to 5000 with $\alpha,\beta$-unsaturated monocarboxylic acids (component B), |
| | and |
| 5 to 40 wt% | fully etherified phenol-formaldehyde condensation resin with on average at least 2 reactive positions per molecule (component C). |

**3.** A coating agent according to Claim 2, characterized in that it contains as binder:

| | |
|---|---|
| component A: | 75 to 45 wt% |
| component B: | 10 to 20 wt% |
| component C: | 10 to 35 wt% |

**4.** A coating agent according to Claim 2 or 3, characterized in that component A is an externally cross-linking, optionally (alkyl)vinylaromatics-containing (meth)acrylate resin with an acid number of 20 to 120 and a hydroxyl number from 0 to 200.

**5.** A coating agent according to Claim 2 or 3, characterized in that component A is a fatty-acid-free, acidic epoxy resin-phosphoric acid ester with an acid number of 10 to 150, produced from an epoxy-group-containing polyglycidyl ether and/or polyglycidyl methacrylate resin with more than 1.3 epoxy groups per molecule and with an epoxide equivalent weight of 180 to 5000.

**6.** A coating agent according to Claim 2 or 3, characterized in that component A is a fatty-acid-free, acidic epoxy resin-carboxylic acid ester with an acid number of 25 to 100 that has been produced by reaction of an epoxy-group-containing resin with more than 1.3 epoxy groups per molecule and an epoxide equivalent weight of 180 to 2500 with mono(alkyl)phenols and/or excess polynuclear phenols and subsequent reaction of the epoxy-group-free reaction product so obtained with cyclic carboxylic acid anhydrides.

**7.** A coating agent according to Claim 2 or 3, characterized in that component A is a phenolic-resin-modified, carboxyl-group-containing, oil-free polyester with an acid number of 15 to 175 and a hydroxyl number of 15 to 175.

**8.** A coating agent according to one of Claims 2 to 7, characterized in that component A is a mixture of a fatty-acid-free, acidic epoxy resin-phosphoric acid ester with an acid number of 10 to 150, produced from an epoxy-group-containing polyglycidyl ether and/or polyglycidyl (meth)acrylate resin with more than 1.3 epoxy groups per molecule and with an epoxide equivalent weight of 180 to 5000 and a phenolic-resin-modified, carboxyl-group-containing, oil-free polyester with an acid number of 15 to 175 and a hydroxyl number of 15 to 175.

**9.** A coating agent according to one of Claims 2 to 8, characterized in that component A is a mixture of 40 to 80 wt% of a fatty-acid-free, acidic epoxy resin-phosphoric acid ester with an acid number of 15 to 40 and 20 to 60 wt% of a phenolic-resin-modified, carboxyl-group-containing, oil-free polyester with an acid number of 35 to 70.

**10.** The use of the coating agent according to Claims 2 to 9 for coating substrates.

**11.** Coated articles that are coated with an aqueous, heat-curable coating agent and stoved, characterized in that they are coated with a coating agent according to Claims 2 to 9.

**12.** Coated articles according to Claim 11, characterized in that they are metallic articles.

**13.** Coated articles according to Claim 11, characterized in that they are coated by anodic electrocoating.

**14.** Coated articles according to Claims 11 to 13, characterized in that they are drink cans or preserved food tins.

**Revendications**

**1.** Procédé de recouvrement d'objets à surface conductrice de l'électricité au moyen d'une application électrophorétique anodique, caractérisé en ce qu'on effectue le recouvrement avec un produit de revêtement aqueux, thermodurcissable, qui contient comme liant un mélange de :

85 à 40 % en poids de résine époxyde contenant un acide carboxylique et/ou phosphorique, de résine acrylique ou de polyester comme résine de base avec un indice d'acide de 10 à 175 et un poids moléculaire moyen $\overline{M}n$ de 1.000 à 10.000 (Composant A),

de 5 à 25 % en poids de polymère greffé de résine époxyde ayant un indice d'acide de 30 à 120, préparé à partir d'un produit réactionnel sans groupes époxydes de polyglycidyléthers dépourvus

d'acides gras comportant plus de 1,3 groupe époxyde par molécule et avec un poids d'équivalent époxyde de 1.000 à 5.000 avec des acides monocarboxyliques $\alpha,\beta$-insaturés (Composant B),

de 5 à 40 % en poids d'une résine de condensation amine-formaldéhyde entièrement éthérifiée et/ou d'une résine de condensation phénolformaldéhyde entièrement éthérifiée avec en moyenne au moins 2 emplacements réactifs par molécule (Composant C), ainsi qu'un solvant organique en une quantité allant jusqu'à 20 % par rapport au poids total du produit de revêtement, éventuellement des additifs pour vernis habituels ainsi que le cas échéant des pigments et/ou des charges.

**2.** Produit de revêtement aqueux thermodurcissable à base de résine époxyde, de résine acrylate ou de polyester en mélange avec une résine de condensation d'aldéhyde comme agent réticulant, ainsi qu'avec des solvants organiques en une quantité allant jusqu'à 20 % en poids par rapport au poids total du produit de revêtement, et éventuellement des additifs pour vernis habituels ainsi que le cas échéant des pigments et/ou des charges, caractérisé en ce qu'il contient comme liant :

85 à 40 % en poids de résine époxyde contenant un acide carboxylique et/ou phosphorique, de résine acrylique ou de polyester comme résine de base avec un indice d'acide de 10 à 175 et un poids moléculaire moyen $\overline{M}n$ de 1.000 à 10.000 (Composant A),

de 5 à 24 % en poids de polymère greffé de résine époxyde ayant un indice d'acide de 30 à 120, préparé à partir d'un produit réactionnel sans groupes époxydes de polyglycidyléthers dépourvus d'acides gras comportant plus de 1,3 groupe époxyde par molécule et avec un poids d'équivalent époxyde de 1.000 à 5.000 avec des acides monocarboxyliques $\alpha,\beta$-insaturés (Composant B), et

de 5 à 40 % en poids d'une résine de condensation phénolformaldéhyde entièrement éthérifiée avec en moyenne 2 emplacements réactifs par molécule (Composant C).

**3.** Produit de revêtement selon la revendication 2, caractérisé en ce qu'il contient comme liant :

| | |
|---|---|
| Composant A : | 75 à 45 % en poids |
| Composant B : | 10 à 20 % en poids |
| Composant C : | 10 à 35 % en poids |

**4.** Produit de revêtement selon la revendication 2 ou 3, caractérisé en ce que le composant A est une résine de (méth)acrylate à réticulation externe, contenant le cas échéant des corps aromatiques (alcoyl)vinyliques avec un indice d'acide de 20 à 120 et un indice d'OH de 0 à 200.

**5.** Produit de revêtement selon la revendication 2 ou 3, caractérisé en ce que le composant A est un ester d'acide phosphorique-résine époxyde acide dépourvu d'acide gras ayant un indice d'acide de 10 à 150, préparé à partir d'un polyglycidyléther contenant des groupes époxyde et/ou de résine polyglycidyl(méth)acrylate avec plus de 1,3 groupe époxyde par molécule et avec un poids d'équivalent époxyde de 180 à 5000.

**6.** Produit de revêtement selon la revendication 2 ou 3, caractérisé en ce que le composant A est un ester d'acide carboxylique-résine époxyde acide dépourvue d'acide gras, avec un indice d'acide de 25 à 100, qui a été préparé par réaction d'une résine contenant des groupes époxyde avec plus de 1,3 groupe époxyde par molécule et un poids équivalent d'époxyde de 180 à 2.500 avec des mono(alcoyl)-phénols et/ou un excès de phénols à plusieurs noyaux puis par réaction du produit réactionnel dépourvu de groupes époxyde ainsi obtenu avec des anhydrides d'acides carboxyliques cycliques.

**7.** Produit de revêtement selon la revendication 2 ou 3, caractérisé en ce que le composant A est un polyester de résine phénolique modifiée, contenant des groupes carboxyle, dépourvu d'huile, avec un indice d'acide de 15 à 175 et un indice d'OH de 15 à 175.

**8.** Produit de revêtement selon l'une des revendications 2 à 7, caractérisé en ce que le composant A est un mélange d'un ester d'acide phosphorique-résine époxyde acide, dépourvu d'acide gras, avec un indice d'acide de 10 à 150, préparé à partir d'un polyglycidyléther contenant des groupes époxyde et/ou une résine de polyglycidyl(meth)acrylate avec plus de 1,3 groupe époxyde par molécule et avec un poids équivalent d'époxyde de 180 à 5.000 et un polyester de résine phénolique modifiée, contenant des groupes carboxyle, dépourvu d'huile, avec un indice d'acide de 15 à 175 et un indice d'OH de 15 à 175.

**9.** Produit de revêtement selon l'une des revendications 2 à 8, caractérisé en ce que le composant A est

un mélange de 40 à 80 % en poids d'un ester d'acide phosphorique-résine époxyde acide dépourvu d'acide gras, avec un indice d'acide de 15 à 40 et de 20 à 60 % en poids d'un polyester de résine phénolique modifiée, contenant des groupes carboxyle, dépourvu d'huile, avec un indice d'acide de 35 à 70.

**10.** Application du produit de recouvrement selon les revendications 2 à 9 au recouvrement de substrats.

**11.** Articles recouverts, qui sont recouverts d'un produit de revêtement aqueux thermodurcissable et cuit, caractérisés en ce qu'ils sont recouverts d'un produit de revêtement selon les revendications 2 à 9.

**12.** Articles recouverts selon la revendication 11, caractérisés en ce qu'il s'agit d'objets métalliques.

**13.** Articles recouverts selon la revendication 11, caractérisés en ce qu'ils sont recouverts par trempage par application électrophorétique anodique.

**14.** Articles recouverts selon les revendications 11 à 13, caractérisés en ce qu'il s'agit de récipients pour boissons ou de boîtes de conserve.